# FASCICULE DE BREVET EUROPEEN

(11) **EP 2 414 931 B1**
(45) Date de publication et mention de la délivrance du brevet: **25.12.2013**
(21) Numéro de dépôt: 09742241.4
(22) Date de dépôt: 03.04.2009
(51) Int. Cl.: G06F 12/02, G06F 12/10, G06F 12/14

(54) **PROCEDE DE CREATION D'UNE ADRESSE VIRTUELLE POUR UNE ENTITÉ LOGICIELLE DITE "FILLE" APPARTENANT AU CONTEXTE D'UNE ENTITÉ LOGICIELLE DITE "MÈRE"**
VERFAHREN ZUM VERWALTEN DES SPEICHERS EINES COMPUTERISIERTEN SYSTEMS
METHOD OF MANAGING THE MEMORY OF A COMPUTERIZED SYSTEM

(43) Date de publication de la demande: 08.02.2012
(73) Titulaire: Alveol Technology Sarl, 1820 Montreux (CH)
(72) Inventeur: JACHIET, Frédéric, CH-1616 Attalens (CH)
(74) Mandataire: Delumeau, François Guy
(86) Numéro de dépôt international: PCT/FR2009/050574
(87) Numéro de publication internationale: WO 2009/136043

(56) Documents cités:
- US-A- 4 758 946
- US-A- 5 956 751
- JACOB B ET AL: "VIRTUAL MEMORY IN CONTEMPORARY MICROPROCESSORS" IEEE MICRO, IEEE SERVICE CENTER, LOS ALAMITOS, CA, US LNKD- DOI:10.1109/40.710872, vol. 18, no. 4, 1 juillet 1998 (1998-07-01), pages 60-75, XP000786716 ISSN: 0272-1732

## Description

### Arrière-plan de l'invention

L'invention se situe dans le domaine de la gestion de la mémoire des systèmes informatiques.

De façon connue, un système informatique exécute des instructions, qu'on appelle communément logiciel, code ou programme informatique tandis que ces instructions manipulent des données stockées en mémoire. Ces données peuvent être par exemple des variables, des pointeurs, des tableaux, des unions ou des structures. La mémoire du système informatique contient à la fois des données et du code.

Entre le processeur et la mémoire du système informatique, on incorpore souvent (surtout dans les systèmes multitâches) une unité de gestion mémoire, appelée MMU (« Memory Management Unit » en anglais) qui effectue la traduction (en anglais « address translation ») entre une adresse virtuelle manipulée par le processeur et une adresse physique en mémoire.

De façon connue, une adresse virtuelle est aussi parfois appelée « adresse logique ».

Le document US 5,956,751 décrit un mécanisme de gestion de la mémoire. La figure 2 de ce document illustre parfaitement les mécanismes conventionnels de segmentation et de pagination, notamment utilisés dans les processeurs 'x86'.

On rappelle en particulier que la mémoire utilisée par un logiciel peut être découpée en segments comme par exemple un segment de données initialisées, un segment données non initialisées, et un segment de code.

En plus de ce mécanisme de segmentation, une MMU découpe la mémoire en pages de taille fixes ou prédéfinies (souvent multiple d'une certaine taille). Un mécanisme d'indirections fait correspondre une page à une adresse virtuelle.

Pour toute requête mémoire, une MMU détermine quel est le segment considéré, puis détermine (le plus souvent au moyen d'une table de correspondance) quelle page est adressée. En dernier lieu, la MMU ajoute un décalage (en anglais « offset »), à l'intérieur de la plage d'adresses considérée, pour sélectionner la bonne adresse mémoire.

Un tel mécanisme de gestion de la mémoire pose un certain nombre de problèmes du fait de la structure même de l'adresse logique.

Comme il a été dit précédemment, l'adresse logique se compose en un champ de page, un champ de segment, et un champ d'offset.

Ces champs ne reflètent aucunement l'architecture du programme informatique ; en particulier, une fonction peut être découpée sur plusieurs pages ou bien une page peut contenir plusieurs fonctions, au moins partiellement.

On comprend donc que si une erreur se produit au moment de l'exécution d'une adresse donnée, il est excessivement difficile d'identifier la portion de code fautive.

Pour résoudre ce problème, il est connu d'utiliser des outils de débogage (en anglais « debugger ») aptes en enregistrer une trace de l'exécution du programme. Pour être efficaces, ces debugger doivent comporter une grand mémoire de trace, solution onéreuse. Par ailleurs, l'analyse de ces traces est complexe.

Une solution, pour limiter les risques d'erreur ou faciliter le débogage pourrait consister à définir statiquement toutes les adresses virtuelles lors de la compilation.

L'homme du métier comprendra que cette solution est inenvisageable dans un environnent complexe, dans lequel on ne connait a priori pas les applications en cours d'exécution, les librairies mises en oeuvre et le volume de données manipulées par l'instance d'une application.

Le document US 4,758,946 décrit également un mécanisme de gestion de la mémoire virtuelle mais non-adapté aux contraintes de débogage.

### Objet et résumé de l'invention :

L'invention vise à résoudre les inconvénients précités en proposant un mécanisme de création d'adresses logiques permettant un débogage excessivement simple et lisible même dans un environnement très complexe.

Plus précisément, l'invention concerne un procédé de création d'une adresse virtuelle pour une entité logicielle dite 'fille' appartenant au contexte d'une entité logicielle dite 'mère', cette adresse virtuelle comportant une série de champs permettant de retrouver la série de champs de l'adresse virtuelle de l'entité logicielle mère et un champ unique dans le contexte de l'entité logicielle mère, et dans lequel chaque série de champs est associée à une seule entité logicielle dans le système informatique qu'elle définit entièrement.

Corrélativement, l'invention concerne un outil de génération de code comportant des moyens de création d'une adresse virtuelle pour une entité logicielle dite « fille » appartenant au contexte d'une entité logicielle dite « mère », cette adresse virtuelle comportant une série de champs permettant de retrouver la série de champs de l'adresse virtuelle de l'entité logicielle mère et un champ unique dans le contexte de l'entité logicielle mère, et dans lequel chaque série de champs est associée à une seule entité logicielle qu'elle définit entièrement.

Dans ce document, une « série de champs » est constituée par un ou plusieurs champs.

Dans ce document, on appellera « entité logicielle » tout objet informatique identifié et nommé dans le code source du programme informatique, comme par exemple un système d'exploitation, un groupe d'application, une application, un processus, un processus léger (dit « thread » en anglais), une classe, une méthode, une fonction, une librairie, un tableau, une variable, une constante, un pointeur, une structure ou une union.

On pourra remarquer qu'un système informatique définit implicitement une hiérarchie entre ces différentes entités logicielles: un système d'exploitation contient un ou plusieurs groupes d'applications, dont chacun comporte une ou plusieurs applications. Une application peut être divisée en processus, eux-mêmes pouvant comporter un ou plusieurs processus légers. Ces processus légers peuvent contenir une ou plusieurs des classes, qui elle-même peuvent contenir ou une plusieurs méthodes. Une méthode peut faire appel à une ou plusieurs fonctions.

Cette hiérarchie définit une notion de descendance ou de parenté: une entité logicielle A, comportant une ou plusieurs entités logicielles B, sera vue comme mère de ces entités logicielles B. Ainsi l'entité logicielle mère d'une méthode est une classe. Par réciprocité, cette méthode peut être considérée comme l'entité logicielle fille de la classe à laquelle elle appartient.

De la même façon, l'entité logicielle mère d'une entité logicielle mère est une entité logicielle grand-mère et une entité logicielle fille d'une entité logicielle fille est une entité logicielle petite-fille.

Dans ce document, on dira de façon équivalente que l'entité logicielle mère est le contexte de l'entité logicielle fille. A titre d'exemple, en langage C, le contexte d'une variable locale à une fonction est cette fonction et le contexte d'une variable globale est la fonction main(). En langage orienté objet, le contexte d'une méthode est sa classe.

Cette invention permet grâce au mécanisme « mère-fille », par la simple analyse d'une adresse logique, de déterminer précisément et directement, en cas d'erreur d'exécution, l'entité logicielle fautive et de remonter dans le contexte exact de cette entité logicielle fautive. Il est ainsi possible de détecter une erreur dans une entité logicielle même si le code source n'est pas connu.

L'invention s'applique parfaitement dans un environnement complexe dans lequel les adresses virtuelles sont définies dynamiquement.

Dans un mode particulièrement simple de mise en oeuvre de l'invention, une adresse virtuelle peut être représentée sous la forme d'un tableau de champs.

En variante, toute autre méthode permettant de retrouver l'adresse logique de l'entité logicielle mère à partir de celle de la fille peut être utilisée.

Ainsi une variante de l'invention consiste à utiliser une fonction mathématique permettant, à partir de l'adresse logique de l'entité logicielle fille, d'obtenir l'adresse logique de l'entité logicielle mère et le champ supplémentaire de la fille unique dans le contexte de la mère.

Dans un mode particulier de réalisation du procédé de création d'adresse selon l'invention, les droits d'une première entité logicielle pour accéder à une deuxième entité logicielle sont déterminés en comparant au moins un champ de l'adresse logique de la première entité logicielle avec au moins un champ de l'adresse logique de la deuxième entité logicielle.

Ceci permet avantageusement de contrôler très finement les droits d'accès au sein du système informatique, les droits pouvant être associés directement et indépendamment à chacune des entités logicielles.

En particulier, lorsqu'une variable est accédée par plusieurs fonctions, l'invention permet de définir des droits d'accès à cette variable différents pour chacune de ces fonctions (en lecture seulement, en écriture seulement, en exécution ou en lecture et en écriture).

De la même façon, l'invention peut permettre d'autoriser l'appel à une librairie par une première fonction et d'interdire l'appel à cette même librairie par une autre fonction.

Le format d'adresse logique proposé par l'invention permet également de définir des droits d'accès par défaut à une entité logicielle en fonction de son niveau dans la hiérarchie « mère-fille ». L'invention permet en particulier d'isoler un processus léger (« thread ») en lui interdisant toute visibilité sur la mémoire des autres processus légers d'un même processus père. Un système classique offre cette possibilité au niveau des processus, mais pas des processus légers.

Dans les mécanismes de l'art antérieur, il est très difficile d'identifier quelle fonction s'exécute ou quelle variable est accédée à partir de son adresse virtuelle.

Pour définir des droits d'accès dans les systèmes conventionnels, il est connu d'utiliser des segments dans lesquels les variables bénéficiant des mêmes droits sont regroupées. Ces segments peuvent être de petite taille au besoin. Mais ce mécanisme n'est pas satisfaisant car un appel inter-segments sollicite le système d'exploitation.

L'invention en définissant des droits au niveau de chaque entité logicielle résout ce problème.

Il s'agit là d'un avantage majeur de cette invention. En s'appuyant sur ces notions d'entités logicielles et de champs, il est possible de définir sur un système informatique des groupes d'applications : chaque groupe d'application sera identifié par l'index de son champ « groupe d'applications ».

Il est alors très facile d'identifier à quel groupe d'applications appartient une entité logicielle au travers de son index de champ 'groupe d'application'. En interdisant avec des droits d'accès spécifiques paramétrés sur la MMU, tout accès entre deux entités logicielles ayant des index de champs 'groupe d'application' différents, le système informatique isole totalement les groupes d'applications entre eux. Ces groupes d'applications sont exécutés sur le même système informatique et partagent la même mémoire, mais ils sont complètement compartimentés les uns par rapport aux autres.

Le but des systèmes de virtualisation existants est d'offrir cette même fonctionnalité, à savoir une étanchéité entre différents groupes d'applications s'exécutant sur le même système informatique.

Mais les systèmes virtualisés existants exécutent chaque instance virtualisée sur un système d'exploitation différent alors que cette invention permet de virtualiser ces groupes d'applications à l'intérieur d'un système d'exploitation unique.

De manière similaire, le système informatique peut télécharger un exécutable non authentifié et exécuter ce logiciel en lui ayant conféré par paramétrage de la MMU des droits d'accès très restreints. Typiquement ce logiciel aura les droits pour dialoguer avec la librairie audio pour jouer de la musique mais ne pourra pas accéder aux fichiers du disque dur. Si ce logiciel contient un virus, ces droits d'accès restreints limitent les possibilités d'endommager le système informatique.

Dans un mode particulier de réalisation, le procédé de création d'adresse virtuelle selon l'invention comporte une étape pour attribuer, à une entité logicielle fille appartenant au contexte d'au moins deux entités logicielles mères, une adresse virtuelle à l'entité logicielle fille pour chacun de ces contextes.

Ainsi, deux entités logicielles mères peuvent accéder à une même entité logicielle fille. Par exemple, lorsque les mères sont des fonctions et la fille une variable, cette caractéristique de l'invention permet à ces fonctions de partager cette variable.

L'invention permet ainsi de créer facilement une mémoire partagée qui sera uniquement visible par deux entités logicielles mères et ce sans recopie de données.

Cette opération peut être réalisée par la MMU, sans faire intervenir le système d'exploitation.

Il peut être soutenu qu'une adresse logique selon l'invention nécessite un grand nombre d'informations pour désigner une entité logicielle et une empreinte mémoire relativement large pour adresser une entité logicielle.

Néanmoins, l'homme de l'art sait qu'une fonction manipule souvent ses propres variables locales.

Dans un mode particulier de réalisation de l'invention, l'adresse virtuelle d'une variable locale peut reprendre explicitement l'adresse logique de sa fonction mère en cours d'exécution. Dans ce mode de réalisation, les premiers champs de l'adresse virtuelle de la variable sont donc identiques à ceux de l'adresse virtuelle du code exécuté.

Afin de compacter les adresses virtuelles, l'invention propose un mode de réalisation dans lequel une adresse virtuelle comporte une information complémentaire contenant le nombre de premiers champs identiques avec une adresse virtuelle de référence, par exemple celle de l'adresse virtuelle de l'entité logicielle en cours d'exécution.

Par conséquent, le procédé de création d'adresse virtuelle selon un mode particulier de réalisation de l'invention propose d'utiliser une adresse virtuelle comportant au moins une information complémentaire précisant les champs identiques à ceux d'une adresse virtuelle d'une entité logicielle de référence.

Dans un mode particulier de réalisation de l'invention, on associe à l'adresse logique d'une entité logicielle une information limitant dans le temps l'accès à cette entité logicielle.

De façon connue, un système informatique peut contenir de la musique ou bien des films auxquels sont attribués des droits d'accès. Mais l'invention permet d'améliorer la gestion des droits en définissant au travers de la MMU une limite temporelle d'accès à une entité logicielle.

Ainsi, une entité logicielle stockant un fichier de musique durant 3 minutes sera accessible en lecture pendant 3 minutes seulement à partir du moment de la première lecture ce qui autorise une et une seule lecture de ce fichier. L'utilisateur peut décider à tout moment quand il commence à jouer son fichier mais ses droits expirent dès que la lecture est terminée.

En cas d'accès à une entité logicielle en dehors de la plage temporelle autorisée, la MMU, par exemple, peut retourner un signal d'erreur.

Ce mécanisme évite de solliciter le système d'exploitation comme d'usage dans l'art antérieur, où il est connu que le système d'exploitation alloue un temps d'exécution maximum à un processus.

Selon un deuxième aspect, l'invention concerne également un procédé d'exécution d'un programme informatique comportant une étape d'allocation d'une plage d'adresses dans la mémoire physique d'un système informatique en association avec l'adresse virtuelle d'une entité logicielle comportant un champ unique dans un contexte, et une série de champs permettant de retrouver la série de champs de l'adresse virtuelle d'une entité logicielle mère définissant ce contexte, et dans lequel chaque série de champs est associée à une seule entité logicielle qu'elle définit entièrement.

Corrélativement, l'invention vise également un système informatique comportant des moyens pour allouer une plage d'adresses dans la mémoire physique d'un système informatique en association avec l'adresse virtuelle d'une entité logicielle comportant un champ unique dans un contexte, et une série de champs permettant de retrouver la série de champs de l'adresse virtuelle d'une entité logicielle mère définissant ledit contexte, et dans lequel chaque série de champs est associée à une seule entité logicielle qu'elle définit entièrement.

La mise en correspondance de plages d'adresses avec les champs de l'adresse logique d'une entité logicielle présente de nombreux avantages sur l'art antérieur pour détecter dynamiquement une erreur d'exécution dans un logiciel.

Typiquement, selon l'art antérieur, un dépassement de tampon ou « buffer overflow » lorsqu'on accède, à un tableau, en dehors de la plage d'adresses allouée à ce tableau.

L'invention permet, par exemple à la MMU, de vérifier que l'accès à une entité logicielle, par exemple un tableau, se fait dans les plages d'adresses allouées à cette entité. Dés lors, toute tentative d'accès à l'extérieur des plages attribuées à cette entité logicielle peut être bloquée par la MMU qui retournera un signal d'erreur.

Dans un mode particulier de réalisation, le procédé d'exécution selon l'invention comporte une étape au cours de laquelle on déplace une entité logicielle en mémoire, celle-ci restant identifiée par la même adresse logique avant et après déplacement.

Selon l'art antérieur, lors de l'exécution, un tableau se voit attribuer par le système d'exploitation, une plage d'adresses mémoire qui sera référencée par au moins un pointeur. Il est alors impossible de déplacer ce tableau en mémoire sans modifier également tous les pointeurs référençant ce tableau.

L'homme de l'art reconnaitra qu'il s'agit d'une tache excessivement complexe voire impossible dans un système traditionnel, car il n'existe aucun moyen de lister tout ces pointeurs, notamment quand les pointeurs sont stockés dans la pile.

L'utilisation d'une série de champs pour adresser une entité logicielle permet de contourner cette limitation: une entité logicielle peut être déplacée en mémoire par la MMU tout en restant adressée par la même série de champ. Pour refléter ce déplacement, la MMU modifie les bornes supérieures et inférieures délimitant cette entité logicielle en mémoire. L'opération de déplacement reste totalement transparente pour le logiciel ou le système d'exploitation qui ne se réfère qu'à des adresses virtuelles.

Cette méthode permet donc de défragmenter la mémoire, mais à la différence de l'art antérieur, cette défragmentation peut être prise en charge intégralement par la MMU sans intervention du système d'exploitation.

Dans un mode particulier de réalisation, la mémoire du système informatique est divisée dynamiquement en deux parties, les entités logicielles utilisées par le, système informatique étant déplacées pour être regroupées dans la première partie de la mémoire tandis que la seconde partie de la mémoire est temporairement inutilisée.

L'invention permet, dans un mode de réalisation particulier de gérer efficacement l'alimentation des plages de mémoire ainsi libérées. Dans un mode particulier de réalisation, cette opération est gérée par la MMU. Elle peut envoyer fréquemment à la mémoire physique l'adresse de la plage de mémoire physique qui doit être alimentée, ce qui permet de réduire la consommation énergétique de la mémoire.

De façon très avantageuse, ce déplacement peut être géré par la MMU.

L'invention permet aussi notamment de déplacer un système d'exploitation, ce qui est en pratique extrêmement difficile, voire impossible avec les mécanismes actuels de gestion de mémoire.

Par ailleurs, dès lors que des entités logicielles sont fréquemment déplacées en mémoire, il est très difficile d'espionner les transferts de données entre la mémoire et le processeur, ce qui sécurise fortement le système informatique, une même adresse mémoire contenant successivement le contenu de différentes entités logicielles.

Dans un mode particulier de réalisation, le procédé d'exécution selon l'invention associe à l'adresse logique d'une entité logicielle le type de cette entité logicielle, le type de cette entité logicielle et sa dimension en mémoire pouvant être modifiés dynamiquement lors de l'exécution.

D'une façon générale, cette caractéristique permet d'éviter les problèmes de débordement connus sur les systèmes informatiques traditionnels sous le nom de 'integer overflow' en anglais..

Dans un mode particulier de réalisation du procédé d'exécution selon l'invention, on associe à l'adresse logique d'une entité logicielle une quantité maximale de mémoire pouvant lui être allouée et en ce que lors de chaque allocation mémoire à cette entité logicielle, on vérifie que cette quantité maximale n'est pas dépassée.

Avantageusement, cette fonction peut être du ressort de la MMU, sans faire intervenir le système d'exploitation comme dans les systèmes informatiques classiques.

Dans un mode particulier de réalisation, le procédé d'exécution d'un programme informatique selon l'invention qu'il comporte, dès qu'un accès est réalisé à cette entité logicielle, une étape de chargement, dans une mémoire cache, uniquement du contenu d'une partie au moins de la plage d'adresses allouée à une entité logicielle.

Dans un système informatique conventionnel, il est possible de charger par anticipation en mémoire cache le contenu des adresses adjacentes en mémoires à l'adresse accédée. Par contre, il est impossible de déterminer si ces adresses adjacentes appartiennent à l'entité logicielle exécutée ou bien à une autre entité logicielle. Charger par exemple, le code d'une autre fonction est inutile. Cette invention permet de limiter le chargement en mémoire cache uniquement du contenu de l'entité logicielle l'entité logicielle.

Inversement, dans un mode particulier de réalisation, le procédé d'exécution d'un programme informatique selon l'invention comporte, dès qu'une entité logicielle cesse d'être exécutée, une étape de déchargement par anticipation, du contenu en mémoire cache, de cette entité logicielle et de ses entités filles.

Typiquement, lorsqu'on bascule d'un premier processus vers un second processus, l'invention permet d'évincer de la mémoire cache les entités logicielles du premier processus et ainsi laisser la mémoire cache libre aux entités logicielles du second processus. L'homme de l'art reconnaitra que ce procédé est avantageux car la recopie ('write-back' en anglais) des données en cache du premier processus est réalisée par anticipation.

### Brève description des dessins

D'autres caractéristiques et avantages de la présente invention ressortiront de la description faite ci-dessous, en référence aux dessins et aux annexes qui en illustrent un exemple de réalisation dépourvu de tout caractère limitatif. Sur les figures :
- la figure 1 représente un outil de génération de code et un système informatique conformes à un mode particulier de réalisation de l'invention ;
- la figure 2 représente l'architecture matérielle du système informatique de la figure 1 ;
- la figure 3 représente un exemple d'adresse logique conforme à l'invention ;
- les figures 4, 6, 7 et 8 représentent l'évolution de la mémoire du système informatique de la figure 1 dans un exemple d'utilisation ;
- la figure 5 représente sous forme d'organigramme les principales étapes d'un procédé de création et de procédé d'exécution selon l'invention ;
- l'annexe 1 est un code source permettant d'illustrer le fonctionnement de l'invention ; et
- l'annexe 2 est un fichier comportant des fonctions générées par l'outil de génération de code de la figure 1.
- les annexes 3 à 8 sont des exemples de fichiers générés par l'outil de génération de code de la figure 1.

### Description détaillée d'un mode de réalisation

Nous allons maintenant décrire l'invention en référence à un exemple de code logiciel écrit en programme C et fourni à l'annexe 1. Dans cet exemple, on considérera que le code logiciel se décompose en trois fichiers AP1.C, AP2.C et LIB FN2.C.

Comme de façon connue, chacun de ces fichiers sources sera compilé afin de générer un exécutable respectivement AP1.EXE, AP2.EXE et LIBFN2.EXE.

Dans cet exemple, le fichier source AP1.C comporte un programme principal MAIN() (Ligne 100) et un certain nombre d'instructions référencées L101.

Nous considérerons dans cet exemple que le fichier source LIBFN2.C est une librairie qui comporte une seule fonction FN2.

Dans l'exemple décrit ici, la fonction FN2 comporte deux paramètres d'entrée, à savoir un entier court VG et un pointeur sur un entier long PTR.

Dans cette fonction, on déclare en outre, à la ligne L33, une variable locale TMP3. L'homme du métier reconnaîtra ensuite aux lignes L34 et L35 deux instructions pour allouer deux plages d'adresses, la taille de ces plages d'adresses étant définie par le premier paramètre de la fonction.

La ligne L36 de cette fonction FN2 libère la mémoire allouée à la ligne L34.

Cette fonction comporte enfin une dernière instruction, à la ligne L37, permettant d'écrire la valeur 1000000 dans l'emplacement mémoire pointé par le deuxième paramètre de la fonction FN2.

De façon très avantageuse, la fonction FN2 comporte, à la ligne L32, une instruction interprétable par un compilateur et qui vise à limiter à 10 octets la quantité mémoire pouvant être allouée par cette fonction.

Dans l'exemple décrit ici, le fichier source AP2.C comporte d'une part un programme principal MAIN() et un certain nombre de fonctions FN1, FN3, lecture_PWD et écriture_PWD.

On remarquera en particulier, que le programme principal MAIN() comporte, à la ligne L7, une instruction, interprétable par le compilateur, pour définir des droits d'accès à une entité logicielle constituée, dans cet exemple par un tableau de six caractères appelés PWD.

Plus précisément, cette instruction définit que cette variable peut être accédée en lecture seulement (« read only » RO) par la fonction lecture-PWD et en écriture seulement par la fonction écriture_PWD (« write only », WO).

L'homme du métier reconnaîtra que les lignes L3 à L6 permettent de définir des variables RES, VG1, VG2, PWD et PWD_USER globales à la fonction MAIN(), c'est-à-dire visibles au sens du langage C par les fonctions FN1, FN3, écriture_PWD et lecture_PWD appelées par cette fonction MAIN().

Les lignes L8 à L11 constituent des appels à ces différentes fonctions. Dans l'exemple décrit ici, la fonction FN1 comporte, de façon remarquable, à la ligne L15, une instruction spécifique interprétable par l'outil de génération de code pour définir les droits d'accès à un entier long timeout déclaré et initialisé à la ligne L14. Plus précisément, cette instruction associe à l'entité logicielle constituée par cette variable, une durée maximale pendant laquelle cette variable peut être accédée. Dans l'exemple décrit ici, cette durée est comptée à partir du premier accès à cette variable en lecture ou en écriture.

Il est remarquable de noter que la ligne L16 comporte une instruction, qui, dans un environnement classique, engendre une erreur à l'exécution connue, par l'homme du métier sous le terme anglais integer overflow. En effet, dans l'exemple de réalisation décrit ici, les entiers longs (de type INT) sont codés sur 16 bits. Or, le résultat de la multiplication de la variable X (initialisée à 11 par la variable timeout initialisée à 20 000 produit un résultat égal à 220 000, valeur qui ne peut être codée sur les 16 bits réservés à cette variable X).

Il sera démontré ultérieurement que l'invention permet de résoudre ce problème. Dans l'exemple décrit ici, la fonction FN3 comporte une boucle aux lignes L21 et L22 qui permet d'initialiser les 'a' premiers éléments de ce tableau avec un entier court, dont la valeur varie à chaque itération de cette boucle.

Dans l'exemple décrit ici, ce tableau comporte 10 éléments (L18).

L'homme du métier comprendra donc que dès lors que la variable a est supérieure à 10, la boucle L21 à L22 créée, à l'exécution, une erreur connue sous le nom de buffer overflow.

Ce qui, par conséquent, entraîne l'écrasement de la variable overflow qui se trouve dans cet exemple adjacente en mémoire au tableau « table ».

Il sera démontré ultérieurement que l'invention permet de détecter ces problèmes et d'éviter l'écrasement de la variable overflow.

On remarquera également que la fonction FN3 comporte, à la ligne L23, un appel à la fonction FN2 de la librairie LIBFN2.C déjà décrite.

Dans l'exemple décrit ici :
- la fonction écriture_PWD initialise la variable globale PWD définie à la ligne L6 de la fonction MAIN, avec la valeur PWD_USER passée en paramètre de cette fonction ; et
- la fonction lecture_PWD vérifie si la variable globale PWD est égale au paramètre de cette fonction.

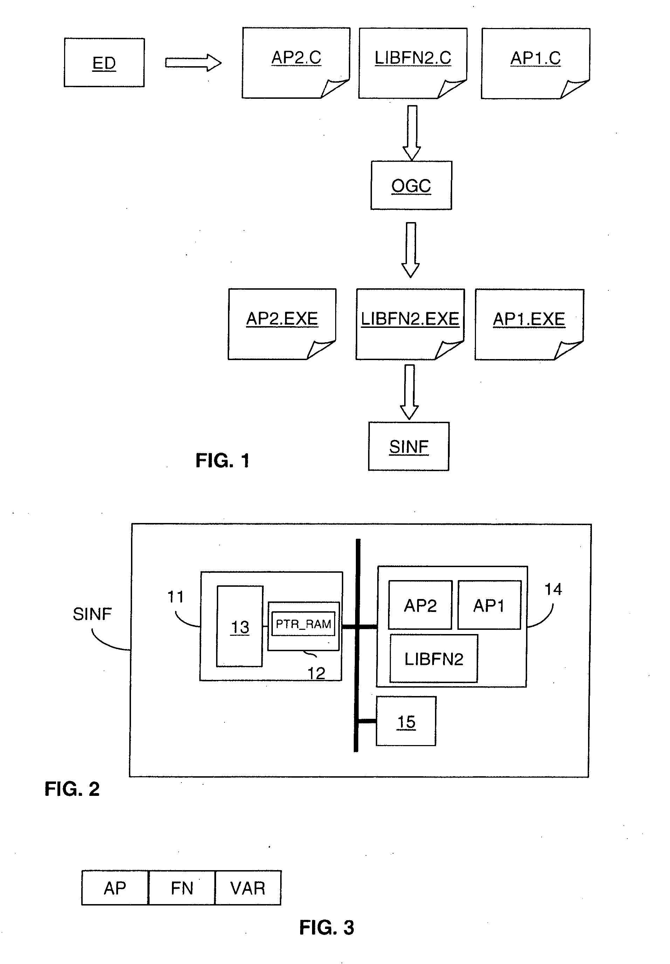

La figure 1 représente un outil de génération de code logiciel et un système informatique conforme à l'invention dans leur environnement. Sur cette figure, on a représenté un éditeur de code logiciel ED qui peut être utilisé, comme de façon connue, pour éditer les fichiers sources décrits précédemment en référence à l'annexe 1. Comme de façon connue, l'outil de génération de code OGC permet de compiler les fichiers sources AP2.C et LIBFN2.C pour générer les exécutables AP2.EXE et LIB FN2.EXE exécutables par le système informatique SINF.

Dans l'exemple décrit ici, le système informatique SINF, conforme à l'invention, a l'architecture conventionnelle d'un ordinateur, cette architecture étant représentée à la figure 2.

Plus précisément, ce système comporte un processeur 11 incorporant une unité de gestion de mémoire en anglais MMU, (memory managment unit) référencée 12 et une mémoire vive 13 associée à la MMU 12, une mémoire morte de type ROM 14 dans laquelle on trouve les différents exécutables et une mémoire vive 15 de type RAM.

La figure 3 décrit le format des adresses virtuelles utilisé dans ce mode particulier de mise en oeuvre de l'invention.

Dans l'exemple décrit ici, une adresse virtuelle se compose d'un certain nombre de champs à savoir :
- un champ AP pour une application ;
- deux champs AP et FN pour une fonction ; et
- trois champs AP FN et VAR pour une variable.

Dans l'exemple décrit ici, les codes sources décrits en référence à l'annexe 1 décrivent trois applications, à savoir :
- l'exécutable AP1.EXE,
- l'exécutable AP2.EXE,
- la librairie LIBFN2.EXE.

L'application AP2.EXE est l'entité logicielle mère des fonctions dont le code est inclus dans l'exécutable AP2.EXE. C'est donc le contexte des fonctions MAIN() FN1, FN3, écriture_PWD et lecture_PWD.

Conformément à l'invention, l'adresse virtuelle de chacune de ces fonctions comporte donc l'adresse virtuelle de l'application AP2.EXE. Dans l'exemple de réalisation décrit ici, on prend pour convention d'utiliser l'index 0 pour le champ fonction (FN) de la fonction MAIN.

Cette fonction MAIN est le contexte de toutes les variables globales déclarées dans la fonction MAIN. Dans l'exemple décrit ici, la fonction MAIN est donc le contexte des variables RES, VG1, VG2, PWD et PWD_USER. Afin de bien illustrer le format d'adresse virtuelle utilisé dans l'invention, on peut d'ores et déjà noter, comme cela sera démontré ultérieurement, que dans l'exemple décrit ici :
- l'application AP2.EXE a pour adresse virtuelle : 3 ;
- la fonction MAIN a pour adresse virtuelle : 3.0 ;
- la fonction FN1 a pour adresse virtuelle 3.1 ;
- et la variable RES a pour adresse virtuelle 3.0.1.

On remarque que conformément à l'invention, l'adresse virtuelle d'une entité logicielle fille (par exemple la variable RES) appartenant au contexte d'une unité logicielle mère (à savoir la fonction MAIN) comporte :
- une série de champs « 3.0 » correspondant à l'adresse virtuelle de l'entité logicielle mère ; et
- un champ unique « 1 » dans le contexte de cette entité logicielle mère.

Par ailleurs, il est fondamental de noter que chaque série de champ est associée à une seule entité logicielle dans le système informatique.

Ainsi, par exemple, la série de champ 3.0 correspond à l'entité logicielle du programme MAIN() du fichier appelé AP2.C.

Il est aussi fondamental de noter que chaque série de champs définit entièrement une entité logicielle. En particulier, la série de champs « 3 » définit entièrement l'application AP2.EXE.

L'homme du métier comprendra que dans l'exemple de la figure 3, par souci de simplification, on s'est limité à trois niveaux de champs (application AP, fonction FN, variable VAR).

En variante, une adresse virtuelle peut contenir des champs pour d'autres niveaux d'entité logicielle et par exemple pour les systèmes d'exploitation, groupe d'applications, processus, processus léger (thread), classe, méthode,...

En référence à **l'annexe 2**, nous allons maintenant décrire un certain nombre de fonctions qui sont générées par le compilateur pour permettre la mise en oeuvre de l'invention.

Dans cet exemple :
- une fonction ATTRIB_IDX_DYN attribue dynamiquement, à une entité logicielle fille, un index dans un champ de profondeur « prof » (AP, FN, VAR), cet index étant unique dans le contexte son 'entité logicielle mère. Cette fonction retourne l'index attribué ;
- une fonction ATTRIB_IDX_STAT attribue une adresse virtuelle à une entité logicielle. Cette fonction retourne une valeur représentative du succès ou de l'échec de cette opération ;
- fonction MAP redirige tout accès à une première adresse virtuelle vers une deuxième adresse virtuelle ;
- une fonction UNMAP supprime cette redirection ;
- une fonction ATTRIB_MEM alloue à une adresse virtuelle de code, une plage d'adresses physiques physique dans la mémoire vive du système informatique SINF ;
- une fonction ATTRIB_MEM_EXEC alloue à une adresse virtuelle de données, une plage d'adresses physiques physique dans la mémoire vive du système informatique SINF lors de l'exécution du programme. Cette fonction à deux paramètres, l'adresse virtuelle et la dimension à allouer, et éventuellement un troisième paramètre contenant la taille d'un élément de l'entité logicielle ;
- une fonction MALLOC_MAX définit la taille maximale de la mémoire physique pouvant être allouée par une entité logicielle ;
- une fonction ATTRIB_DROITS définit des droits pour une entité logicielle ; et
- une fonction GET_INDEX fournit un ou plusieurs index des champs d'une entité logicielle.

L'**annexe 3** représente le contenu de l'exécutable LIBFN:EXE obtenu par la compilation du fichier LIBFN2.C par l'outil de génération de code OGC. Dans l'exemple de réalisation décrit ici, un tel fichier exécutable comporte deux parties principales, à savoir :
- une partie HEADER (en-tête) utilisée lors du chargement de l'exécutable dans la mémoire du système informatique ; et
- une partie CODE utilisée au moment de l'exécution.

Dans l'exemple décrit ici, la compilation de la ligne L31 génère quatre instructions IN31 à IN34.

Plus précisément, l'instruction IN31 est une instruction qui permet de demander à la MMU 12 d'attribuer dynamiquement un index au champ application AP à la fonction FN2. On notera Y la valeur retournée par la MMU de ce champ.

L'instruction IN33 est une instruction qui permet d'attribuer l'adresse virtuelle Y.0 au code de la fonction FN2. On notera que cette adresse virtuelle reprend les champs de l'application LIBFN2.

L'instruction IN33 permet d'attribuer une adresse virtuelle Y.0.1 au premier paramètre VG de la fonction FN2.

L'instruction IN34 permet d'attribuer une adresse virtuelle Y.0.2 au deuxième paramètre de la fonction FN2.

De la même façon, l'en-tête de l'exécutable comporte trois instructions IN35 à IN37 pour attribuer des adresses virtuelles aux variables TMP3, PTR1 et PTR2.

L'en-tête comporte ensuite une instruction IN38 pour demander à la MMU 12 d'attribuer 100 octets de mémoire au code de la fonction FN2 désigné par l'adresse virtuelle Y.0. L'homme du métier comprendra que cette valeur de 100 octets correspond à la taille nécessaire en mémoire pour charger les instructions de la partie CODE de cet exécutable.

Le fait de pouvoir gérer l'attribution de mémoire au niveau de la MMU est un avantage important offert par l'invention car dans les systèmes connus, cette fonction est réalisée par le système d'exploitation.

Grâce à l'invention, les logiciels y compris le système d'exploitation, ne connaissent de la mémoire que les adresses virtuelles, mais pas les adresses physiques.

Dans l'art antérieur, on cherche à isoler la mémoire utilisée par les différents processus pour se prémunir des problèmes de corruption mémoire. Il en résulte une forte complication de l'échange de données entre les différents processus, le système d'exploitation étant sollicité.

Cette invention permet de simplifier considérablement les échanges de données entre différentes entités logicielles, uniquement grâce à la MMU.

Par ailleurs, grâce à l'invention, l'empreinte mémoire attribuée à une entité logicielle est dimensionnée avec une granularité aussi fine que la granularité d'adressage de la mémoire par le système informatique, typiquement 1 octet sur un système « x86 ».

Un système informatique traditionnel utilisant une pagination alloue la mémoire avec une granularité de page, mais la taille de cette page ne correspond pas forcément à la taille en mémoire d'une entité logicielle : la dimension de la page allouée est supérieure à la taille en mémoire de l'entité logicielle et cet excès de mémoire alloué est inutilisée par le système informatique.

De retour à l'annexe 3, le HEADER comporte enfin une instruction IN39 pour demander, à une unité de chargement, de charger en mémoire de l'unité d'informatique SINF le CODE de l'application FN2. Dans cet exemple, l'outil de chargement est un outil référencé LOAD (loader), et compris dans le système d'exploitation du système informatique.

La partie CODE, de 100 octets, comporte le code de la fonction FN2.

Dans cet exemple, la partie CODE comporte une instruction IN40 pour demander, au moment de l'exécution, à la MMU 12, d'allouer deux octets pour la variable d'adresse virtuelle Y.0.3 à savoir la variable TMP3 déclarée à la ligne L33. De la même façon, les instructions IN41 et IN42 permettent d'attribuer aux pointeurs PTR1 et PTR2 d'adresses virtuelles Y.0.4 et Y.0.5 une plage d'adresses mémoire dont la taille est définie par la variable d'adresses virtuelles Y.0.1, premier paramètre de la fonction FN2.

Dans l'exemple décrit ici, la partie CODE comporte une première instruction IN50, résultat de l'interprétation par l'outil de génération de code OGC de la ligne L32, et qui permet de demander à la MMU de vérifier qu'au maximum 10 octets sont alloués pour cette fonction FN2.

Dans l'exemple décrit ici, étant donné que la valeur du premier paramètre de la fonction FN2 est la variable VG2 initialisée à 5, le nombre d'octets alloués par cette portion de CODE, aux instructions IN40 à IN42 est égal à 12, valeur supérieure à la taille maximum autorisée de 10 octets. Il sera démontré ultérieurement que ceci déclenche un signal d'erreur au moment de l'exécution. Le code de cet exécutable comporte ensuite, une instruction IN43, pour libérer la mémoire associée au pointeur PTR1 d'adresses virtuelles Y.0.4. Le code comporte ensuite une instruction IN44 pour écrire le résultat de la multiplication de X.1.1 par X.1.2 dans Y.0.2.

En référence à **l'annexe 4**, nous allons maintenant décrire le résultat de la compilation de la fonction FN1.

On retrouve ici les deux parties HEADER et CODE déjà décrites en référence à l'annexe 3.

Dans cette annexe, l'index X est l'index du champ application correspondant à l'exécutable AP2.EXE. Dans cet exemple, la partie en-tête comporte trois instructions IN60, IN61 et IN62 pour attribuer des adresses virtuelles, respectivement au code de la fonction FN1, et aux variables x et timeout.

Les instructions IN63 et IN64 permettent d'attribuer 100 octets de mémoire pour le CODE de la fonction FN1 et de charger ce CODE en mémoire.

La partie CODE comporte une instruction IN65 pour attribuer deux octets à la variable X d'adresse virtuelle X.1.1.

On remarquera que la partie CODE comporte une instruction IN651 qui spécifie que la variable x, d'adresse virtuelle X.1.1 est de type INT, ce qui définit non seulement sa taille (16 bits), mais également son type (signé, non signé, ...).

Dès lors, si au cours de l'exécution une demande pour écrire, dans la variable x, une valeur incompatible avec son type, peut être détectée par la MMU, celle-ci pouvant par exemple générer un signal d'erreur. La MMU peut éventuellement modifier dynamiquement le type de cette variable, par exemple étendre son type à « long » afin de stocker une valeur sur 32 bits.

La partie CODE comporte une instruction IN66 pour attribuer deux octets à la variable timeout d'adresse virtuelle X.1.2.

La partie CODE comporte une instruction IN67 résultat de la compilation de la ligne L15 du CODE de la fonction FN1. Cette instruction permet de demander à la MMU 12 de vérifier que la variable TIMEOUT d'adresses virtuelles X.1.2 ne peut être accédée que pendant la durée d'une seconde comptée à partir du premier accès à cette variable que ce soit en lecture ou en écriture.

Le code contient une dernière instruction IN68 pour initialiser la variable timeout d'adresses virtuelles X.1.2 avec la valeur 20 000.

L'**annexe 5** décrit le résultat de la compilation de la fonction lecture_PWD du fichier AP2.C.

Il est remarquable, dans ce fichier, que l'on retrouve l'index X du champ application de l'exécutable AP2.EXE puisque cette fonction lecture_PWD est dans le même contexte que la fonction FN1 déjà décrite.

Les instructions IN70 à IN74 de la partie en-tête (header) sont similaires à celles décrites précédemment à l'annexe 4. Elles permettent d'attribuer des adresses virtuelles à la fonction lecture_PWD, aux paramètres PWD_USER et à la valeur de retour de cette fonction, et d'attribuer 50 octets en mémoire pour le CODE de cette fonction et de charger la fonction en mémoire.

La partie CODE comporte une instruction IN75 pour comparer le paramètre PWD_USER d'adresse logique X.4.1. avec la variable globale PWD du programme principal MAIN(), l'obtention de l'adresse logique X.0.4 de cette variable étant décrite ultérieurement en référence à l'annexe 8.

L'**annexe 6**, résultat de la compilation de la fonction écriture_PWD est obtenue de la même manière.

L'**annexe 7** décrit le résultat de la compilation de la fonction FN3 du fichier source AP2.C.

On y retrouve une partie HEADER qui comporte des instructions pour attribuer des adresses virtuelles au CODE de la fonction 3 et à chacune des variables a, b, table, overflow, i déclarées aux lignes L17 à L20.

On remarquera simplement que l'index du champ fonction FN attribué à la fonction FN3 est l'index 2.

La partie CODE comporte une instruction IN80 remarquable en ce qu'elle permet de déclarer explicitement à la MMU 12 que le tableau « table », d'adresse virtuelle X.2.3 est constitué par 10 éléments dont chacun occupe 1 octet.

Les instructions suivantes IN80 et IN82 sont du même type que celles décrites précédemment et permettent d'allouer respectivement deux octets et un octet aux variables overflow et i.

On rappelle que la fonction FN3 comporte aux lignes L21 et L22 une boucle. Par souci de simplification, seule la compilation de la ligne 22 a été reportée dans l'annexe 7, à l'instruction IN83. Il est remarquable, que dans cette instruction, on ne voit pas apparaître, comme avec un compilateur classique, l'offset de l'élément du tableau adressé.

En particulier, lorsque la variable i vaut 7, les entiers (type INT) étant codés sur 2 octets, un compilateur traditionnel donnerait instruction au processeur, pour sélectionner le 7ème élément, de se déplacer de 14 octets dans le tableau, ce qui évite ainsi une source connue de bug informatique.

Par ailleurs, on rappelle que la ligne L23 de la fonction FN3 fait appel à la fonction FN2 déclarée dans une librairie externe à cette application. Autrement dit, au sens de l'invention, l'application AP2 n'est pas le contexte de la fonction FN2. Si bien que la fonction FN2 ne peut comporter le champ X, attribué à l'application AP2 dans son adresse virtuelle.

Par conséquent, la partie CODE de la fonction FN3 comporte des instructions IN84 permettant d'obtenir l'index du champ application de la fonction FN2, cette fonction d'index peut, selon la présente invention, être interprétée soit par la MMU 12, soit par le système d'exploitation du système informatique SINF.

Dans un mode particulier de réalisation de l'invention, la fonction qui exécute GET_INDEX, à savoir la MMU ou le système d'exploitation peut vérifier que l'application AP2 possède des droits suffisants pour obtenir l'index du champ application de la fonction FN2.

On remarquera que l'entité logicielle VG2 notamment comporte deux adresses virtuelles, à savoir l'adresse virtuelle Y.0.1 dans le contexte de la fonction FN2 de la librairie LIBFN2 et l'adresse virtuelle X.0.3 dans le contexte de la fonction MAIN() de l'application AP2.EXE.

L'instruction IN85 permet, grâce à la fonction MAP de rediriger tout accès à l'adresse virtuelle Y.0.1 à l'adresse virtuelle X.0.3.

L'instruction IN86 est similaire, pour la variable « table ».

L'instruction IN87 permet d'appeler la fonction FN2 d'adresse virtuelle Y.0.

Les instructions IN88 et IN89 annulent la redirection effectuée aux instructions IN85 et IN86.

L'**annexe 8** donne le résultat de la compilation de la fonction MAIN() du fichier source AP2.C.

Sa partie HEADER comporte une instruction IN101 permettant d'attribuer dynamiquement un index au champ application AP de l'exécutable AP2.EXE. Cette index est noté X. Il est de la même nature que l'index Y de la librairie LIBFN2.EXE.

L'instruction IN102 permet d'attribuer l'adresse virtuelle X.0 au CODE de la fonction MAIN().

Les instructions IN103 à IN107 attribuent les adresses des variables globales selon un mécanisme déjà décrit.

On notera, que dans le mode de réalisation décrit ici, les variables globales appartiennent au contexte de la fonction MAIN(), si bien que les adresses logiques de chacune des variables globales reprend l'adresse logique X.0 attribuée à la fonction MAIN().

L'instruction IN108 attribue 1 000 octets en mémoire pour le CODE de la fonction MAIN() et l'instruction IN109 charge cette fonction MAIN() en mémoire. La partie CODE comporte cinq instructions IN110 à IN114 pour attribuer une plage d'adresse physique de 1, 2 ou 6 octets à chacune des variables RES, VG1, VG2, PWD et PWD_USER. Les instructions IN115 et IN116 permettent d'initialiser respectivement les variables VG1 et VG2 avec les valeurs 11 et 5.

L'instruction IN117 est le résultat de la compilation de la ligne L7 de la fonction MAIN(). Elle permet de définir les droits d'accès à la variable PWD. Dans l'exemple décrit ici, elle doit être interprétée comme donnant des droits en lecture seulement (read only, RO) à la fonction d'adresse logique X.4 (lecture_PWD) et des droits en écriture seulement à la fonction d'adresse logique X.3 à savoir la fonction (écriture_PWD).

L'instruction IN118 est un appel à la fonction FN1. Au cours de l'exécution de la ligne L16, le processeur cherche à écrire la valeur 220000 dans la variable x de type entier (INT). Cette incompatibilité est détectée par la MMU 12 qui génère un signal d'erreur. En variante elle aurait pu d'une part modifier le type associé à cette variable et d'autre part allouer une plage d'adresse de 32 bits (dimension long), évitant ainsi dynamiquement une erreur d'exécution.

Les instructions IN119 et IN120 sont du même type que les instructions IN85 et IN86 décrites précédemment en référence à l'annexe 7. Elles permettent de rediriger les accès aux paramètres a et b de la fonction FN3 vers les variables globales VG1 et VG2 de la fonction MAIN().

L'instruction IN121 fait appel à la fonction FN3 d'adresse logique X.2.

Les instructions IN122 et IN123 annulent les redirections faites aux instructions IN119 et IN120.

L'instruction IN124 est une instruction permettant de rediriger les accès aux paramètres PWD_USER d'adresse logique X.0.5 vers la variable globale PWD_USER d'adresse logique X.3.1.

L'instruction IN125 est un appel à la fonction écriture_PWD.

L'instruction IN126 annule la redirection de l'instruction IN124.

Les instructions IN127 à IN131 sont du même type pour la fonction lecture_PWD. Nous allons maintenant expliquer comment se déroule l'exécution de l'application AP2.EXE.

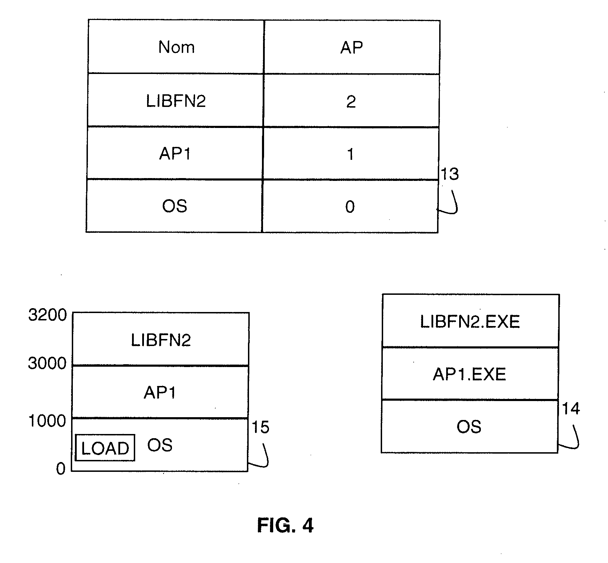

En référence à la **figure 4**, nous allons décrire l'état du système informatique SINF avant cette exécution.

Nous considérons dans cet exemple que le système d'exploitation OS, l'application AP1.EXE et la librairie LIBFN2.EXE sont déjà chargés dans la mémoire vive 15.

Dans l'exemple décrit ici, le système d'exploitation OS comporte un module LOAD permettant de charger les codes en mémoire.

Dans l'exemple décrit ici, l'OS, l'application AP1.EXE et la librairie LIBFN2.EXE occupent respectivement les plages d'adresses 0:1000, 1000:3000, 3000:3200.

On retrouve les trois exécutables et le système d'exploitation OS dans la mémoire morte 14.

On a représenté plus précisément le contenu de la mémoire 13 associée à l'unité de gestion de la mémoire MMU 12.

Dans l'exemple décrit ici, les adresses logiques sont gérées sous forme de tables, à savoir avec une table par niveau hiérarchique au sens de la logique mère-fille précédemment décrite.

Autrement dit, dans l'exemple décrit ici, il y a une table pour les applications, une table pour les fonctions et une table pour les variables. Dans l'exemple de réalisation décrit ici, les champs application AP du système d'exploitation OS, de l'application AP1.EXE et de la librairie LIBFN2.EXE sont respectivement les index 0, 1 et 2.

Par conséquent, dans le mode de réalisation décrit ici, la mémoire 13 comporte une table de niveau application comportant trois lignes, chaque ligne comportant d'une part le nom de l'application et d'autre part l'index associé à cette application. Dans l'exemple de réalisation décrit ici, chacune de ces lignes pointe éventuellement vers une table de niveau inférieur dans la hiérarchie mère-fille, pour référencer les adresses logiques de niveau inférieur. Ce mécanisme sera décrit précisément en référence aux figures qui vont suivre.

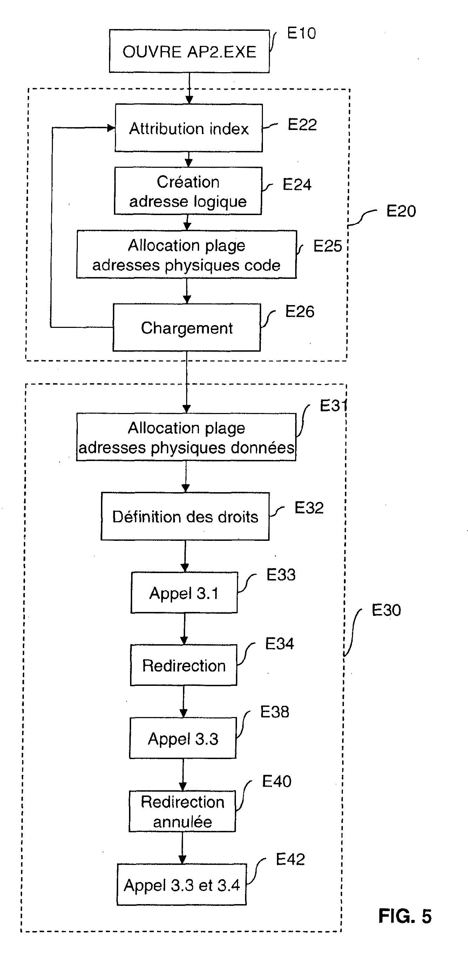

En référence à la **figure 5**, nous allons maintenant décrire un procédé d'exécution conforme à l'invention, pour exécuter le programme exécutable de l'annexe 8 obtenue par compilation de la fonction MAIN() du fichier AP2.C. Nous supposons que ce fichier AP2.EXE est ouvert au cours d'une étape E10.

Le traitement du fichier AP2.EXE comporte un premier traitement, effectué par le module LOAD du système d'exploitation OS, pour traiter la partie HEADER de ce fichier. Cette étape générale est référencée E20 sur la figure 5.

Il comportera ensuite, une étape générale E30, pour exécuter le programme informatique AP2.EXE une fois que celui-ci a été chargé en mémoire.

Nous allons d'abord décrire précisément le traitement de la partie HEADER (en-tête). L'étape générale E20 comporte, dans l'exemple décrit ici une première sous-étape référencée E22, correspondant à l'exécution de l'instruction IN101, au cours de laquelle on attribue l'index 3, au champ application de l'exécutable AP2.EXE.

Cette valeur est choisie par la MMU 12, après consultation de la table application de la mémoire 13.

On constate en effet, en référence à la figure 4, que les index 0, 1 et 2 sont déjà réservés. La MMU attribue un index libre. Il est bien entendu qu'il n'est pas essentiel de choisir un index consécutif. La seule exigence étant que cet index soit libre.

Ce procédé comporte ensuite une sous-étape E24 pour attribuer des adresses logiques aux entités logicielles descendantes de l'application AP2.EXE.

En particulier, l'exécution de l'instruction IN102 alloue, au code de la fonction MAIN() l'adresse logique 3.0.

Puis, chacune des instructions IN103 à IN107 attribue une adresse logique aux filles de la fonction MAIN().

Chacune des adresses logiques créées pendant cette sous-étape E24 est reportée dans la structure de données de la mémoire 13 de la MMU 12.

Plus précisément, on créé une table FN de niveau « fonction » pour enregistrer l'adresse logique de la fonction MAIN() et une table VAR de niveau « variable » pour enregistrer les adresses logiques des variables globales de la fonction MAIN().

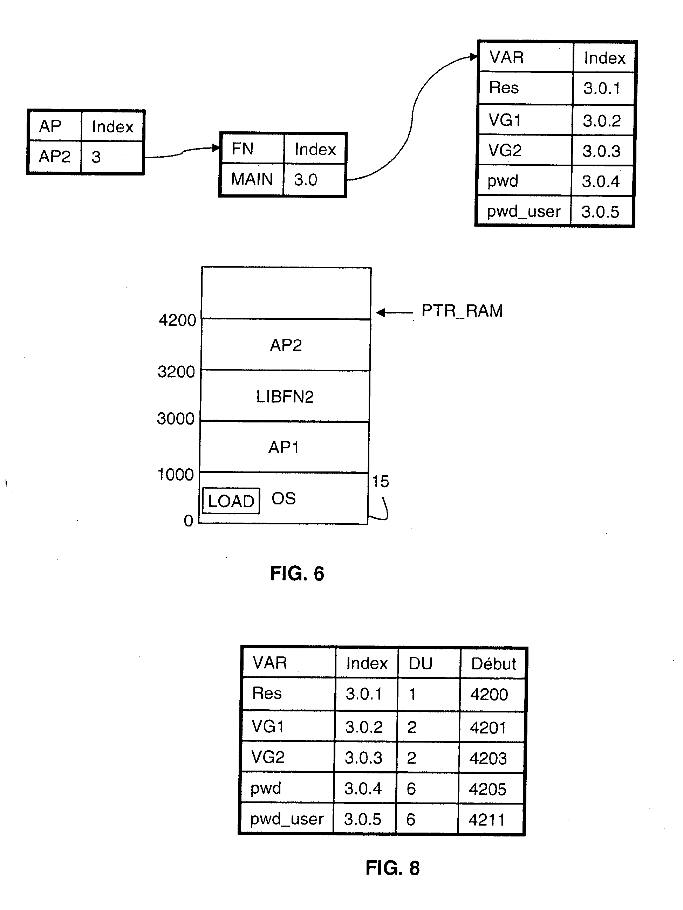

Comme représenté à la **figure 6**, qui représente l'état de la mémoire 13 après exécution de la sous-étape E24, la table AP de niveau « application » pointe sur la table FN de niveau « fonction » qui elle-même pointe sur la table VAR de niveau « variable ».

Cette structure de données permet, bien entendu, à une entité logicielle mère de connaître les adresses logiques de ces entités logicielles descendantes, par parcours de cette chaîne de pointeurs.

On notera qu'il n'est pas nécessaire, grâce à l'invention, de prévoir un chaînage inverse, car toute entité logicielle fille peut, en consultant les premiers champs de son adresse logique, connaître les adresses logiques de chacun de ses ancêtres.

La sous-étape E24 est suivie par une sous-étape E25 qui alloue en mémoire une plage d'adresses à chacune des entités logicielles du tableau FN de niveau « fonction ». Cette sous-étape correspond à l'exécution des instructions IN108 et IN109 pour allouer 1 000 octets de mémoire à la fonction MAIN() dans la mémoire vive 15.

La sous-étape E25 est suivie par une sous-étape E26 au cours de laquelle le module de chargement LOAD charge la partie CODE du fichier AP2.EXE dans cette plage d'adresses.

L'état de la mémoire vive 15 après le chargement de l'application AP2 est représenté sur la même figure 6.

L'étape générale E20 se répète en boucle, pour tous les HEADER contenus dans l'exécutable AP2.EXE, à savoir ceux décrits précédemment en référence aux annexes 3 à 8.

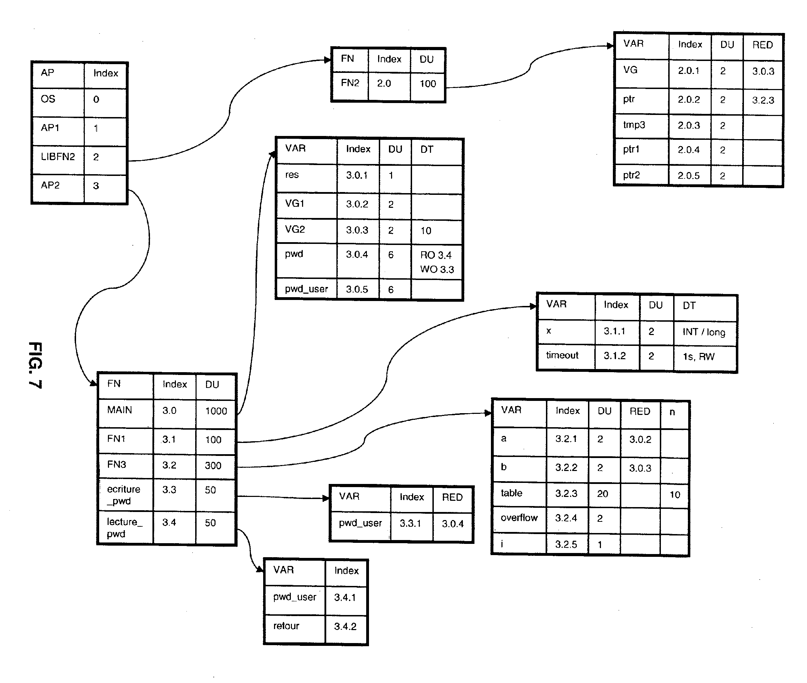

La **figure 7** représente l'arborescence des tables de la mémoire de la MMU après traitement de tous ces HEADER après l'étape générale E20.

L'application AP2.EXE ayant été chargée en mémoire vive 15, nous allons maintenant décrire l'exécution de cette application par le processeur 11.

Cette exécution démarre par une étape E31 comprenant l'exécution de l'instruction IN110 de la partie CODE du fichier AP2.EXE. Cette instruction consiste à attribuer 1 octet à la variable RES d'adresse logique 3.0.1 dans la mémoire vive 15.

Dans cet exemple de réalisation, la plage attribuée à chacune des variables est mémorisée dans la table de niveau « variable » VAR gérée par la MMU 12.

A cet effet, dans le mode de réalisation décrit ici, la MMU 12 comporte un registre dans lequel elle conserve un pointeur PTR_RAM vers la première adresse libre dans la mémoire vive 15.

A titre d'exemple, les plages d'adresse physique attribuées aux différentes variables de la fonction MAIN() sont reportées dans la structure de données de la **figure 8**.

Dans l'exemple de la figure 8, chaque plage d'adresse est repérée par une adresse de début et une taille DU.

En variante, on pourrait prévoir une adresse de début et une adresse de fin ou une dimension et une adresse de fin.

Les instructions IN115 et IN116 correspondent aux lignes L4 et L5 de la fonction MAIN(). Pour leur exécution, le processeur recherche, dans la structure de données, l'adresse physique associée aux adresses logiques 3.0.2 et 3.0.3.

A titre d'exemples, l'adresse logique 3.0.2 correspond à la variable 2 de la fonction MAIN() (champ 0) de l'application AP2 (index 3).

L'étape E31 est suivie, dans cet exemple par une étape E32 d'attribution des droits, correspondant à l'exécution de l'instruction IN117.

On rappelle, que conformément au choix du programmeur, la variable PWD peut être accédée en lecture uniquement par la fonction lecture_PWD et en écriture seulement par la fonction écriture_PWD. Ceci se traduit, après exécution de l'instruction IN117, par des droits mémorisés dans la structure de données gérée par la MMU 12.

Plus précisément, ces droits sont répertoriés dans un champ DT associé à l'adresse logique 3.0.4 associée à cette variable.

Ce champ DT est contrôlé par la MMU 12 à chaque accès à l'entité logicielle PWD d'adresse logique 3.0.4. Pour la mise en oeuvre de l'invention, la MMU 12 est renseignée par le processeur, pour connaître les entités logicielles en cours d'exécution et les variables accédées.

En variante ce contrôle peut être fait par le processeur 11 dès lors qu'il connaît les droits mémorisés dans la mémoire 13 de la MMU 12.

Le processeur appelle ensuite, au cours d'une étape E33, la fonction FN1, d'adresse logique 3.1, en exécution de l'instruction IN118.

Puis, au cours d'une étape E34, le processeur 11 exécute les instructions IN119 et IN120 de redirection d'adresse virtuelle, comme déjà décrit.

Au cours de cette étape, la MMU 12 enregistre la redirection d'adresse dans la table VAR de niveau « variable » comme représenté à la figure 7.

Par conséquent, après cet enregistrement, tout accès à la variable a d'adresse virtuelle 3.2.1 est renvoyé vers la variable VG1 d'adresse logique 3.0.2.

Il faut noter que, conformément à l'invention, on peut spécifier des droits d'accès différents à une même entité logique en fonction du contexte. En particulier, on peut accéder à l'entité logicielle d'adresse virtuelle 3.2.1 avec des droits d'accès différents de ceux définis pour accéder à cette même entité logicielle avec l'adresse 3.0.2.

Le procédé d'exécution conforme à l'invention comporte, dans cet exemple une étape E38 pour exécuter la fonction ecriture_PWD, d'adresse virtuelle 3.3.

Dans l'exemple de réalisation décrit ici, le procédé comporte ensuite une étape E40, au cours de laquelle le processeur exécute les instructions IN122 et IN123 pour annuler les redirections effectuées à l'étape E34.

On notera que l'image de la mémoire donnée à la figure 7 est l'image de la mémoire avant cette étape d'annulation.

Bien entendu, après l'exécution d'une entité logicielle, la MMU 12 détruit l'adresse logique de cette entité logicielle, de ses entités logicielles fille, et libère les plages d'adresses mémoire allouées à ces entités.

Dans l'exemple de réalisation décrit ici, le procédé d'exécution conforme à l'invention se termine par une étape E42 au cours de laquelle il exécute des instructions IN124 à IN131 correspondant aux appels des fonctions écriture_PWD et lecture_PWD.

Le mécanisme est exactement le même que celui mis en oeuvre pour l'exécution de la fonction FN3. Dans le mode de réalisation décrit ici, on associe au moins pour certaines entités logicielles, un type de cette entité logicielle dans les tables de la mémoire 13 gérées par la MMU 12.

Dans l'exemple décrit ici, on associe en particulier le type INT à la variable X d'adresse virtuelle 3.1.1 comme représenté à la figure 7.

Ceci permet avantageusement, à la MMU 12, de vérifier que tout accès en écriture à cette entité logicielle est compatible avec cette entité logicielle que ce soit au niveau du type ou au niveau de la taille.

La MMU 12 détecte ainsi l'erreur de programmation de la ligne L16.

### ANNEXE 1

**AP1.C**
   L100 → int main () {
   L101 → ... }
**AP2.C**
   L1 → extern int fn2(short param, short *ptr) ;
   L2 → int main () {
   L3 → short res ;
   L4 → int VG1 = 11 ;
   L5 → int VG2 = 5 ;
   L6 → ... char pwd[6] ; char pwd_user[6] ;
   L7 → # pwd : RO, lecture_pwd ; WO ; ecriture_pwd #
   L8 → fn1 () ;
   L9 → fn3 (VG1, VG2) ;
   L10 → ecriture_pwd (pwd_user) ;
   L11 → res = lecture_pwd (pwd_user) ; }

   L12 → void fn1 () {
   L13 → int x = 11 ;
   L131 → # TYPE = int #
   L14 → int timeout = 20000 ;
   L15 → #timeout : RO, 1s, 1^{er} accès RW#
   L16 → x = x * timeout ; }

   L17 → void fn3 (int a, int b) {
   L18 → int table[10] ;
   L19 → ... int overflow ;
   L20 → short i ;
   L21 → for (i=0 ; i<a ; i++) {
   L22 → table[i] = i ; }
   L23 → fn2 (VG2, table) ; }
   L24 → short lecture-pwd (char[6] pwd_user) {
   L25 → if (pwd_user == pwd) {
   L26 → return OK ;
   L27 → } else {
   L28 → return NG ; } }

   L29 → void ecriture_pwd (char[6] pwf_user) {
   L30 → pwd = pwd_user ; }
**LIBFN2.C**
   L31 → void fn2 (short VG, long *par)
   L32 → #MALLOC_MAx = 10#
   L33 → int tmp3
   L34 → int *ptr1=malloc (VG) ;
   L35 → int *ptr2=malloc (VG) ;
   L36 → free (ptr1) ;
   L37 → *ptr = 1000000 ; }

### ANNEXE 2

```
          short ATTRIB_IDX_DYN (short prof, nom) {
            ; retourne un index pour la profondeur prof de l'entité nom
          }
          short ATTRIB_IDX_STAT (adresse_logique) {
            ; attribue une adresse logique
            ; retourne OK, NG en cas d'échec
          }
          void MAP(adresse_logique1, adresse_logique2) {
           ; redirige les accès à adresse_logique1 vers adresse_logique2
          }
          void UNMAP(adresse_logique1, adresse_logique2) {
           ; supprime la redirection
          }
          int ATTRIB_MEM (adresse_logique, taille) {
           ; alloue taille octets pour adresse_logique en mémoire
          physique ;
          }
          int ATTRIB_MEM_EXEC (adresse_logique, taille) {
           ; alloue taille octets pour adresse_logique en mémoire
          physique ;
          }
          MALLOC_MAX(taille) {
           ; définit la taille maximale de la mémoire physique pouvant
          être allouée par une entité logicielle ;
          }
         ATTRIB_DROITS (entité logicielle, droits) {
           ; attribue des droits à une entité logicielle
          GET_INDEX (AP, FN, ..., entité logicielle) {
            ; retourne un ou plusieurs index des champs d'une entité
          logicielle.
          }
```

### ANNEXE 3

### LIBFN2.EXE

HEADER
   IN31 → Y=ATIRIB_IDX_DYN (AP, libfn2) ;
   IN32 → ATIRIB_IDX_STAT(Y.0); /* adresse_virtuelle de fn2() */
   IN33 → ATTRIB_IDX_STAT(Y.0.1) ; /* adresse_virtuelle de VG */
   IN34 → ATTRIB_IDX_STAT(Y.0.2) ; /* adresse_virtuelle de ptr */
   IN35 → ATTRIB_IDX_STAT(Y.0.3) ; /* adresse_virtuelle de tmp3 */
   IN36 → ATTRIB_IDX_STAT(Y.0.4) ; /* adresse_virtuelle de ptr1 */
   IN37 → ATTRIB_IDX_STAT(Y.0.5) ; /* adresse_virtuelle de ptr2 */
   IN38 → ATTRIB_MEM (Y.0, 100) ; /* alloue 100 octets pour fn2 () */
   IN39 → LOAD Y.0
CODE
   IN50 → MALLOC_MAX(10)
   IN40 → ATIRIB_MEM-EXEC (Y.0.3, 2)
   IN41 → ATIRIB_MEM-EXEC (Y.0.4, Y.0.1)
   IN42 → ATTRIB_MEM-EXEC(Y.0.5, Y.0.1)
   IN43 → FREE_MEM(Y.0.4)
   IN44 → *(Y.0.2) = 1000

### ANNEXE 4

### AP2.EXE /* compilation de fn1() */

HEADER
   IN60 → ATTRIB_IDX_STAT (X.1) ; /* adresse_virtuelle de fn1 */
   IN61 → ATTRIB_IDX_STAT(X.1.1) ; /* adresse_virtuelle de x */
   IN62 → ATIRIB_IDX_STAT(X.1.2) ; /* adresse_virtuelle de timeout */
   IN63 → ATTRIB_MEM(X.1, 100) ; /* alloue 100 octets pour fn1 */
   IN64 → LOAD X.1
CODE
   IN65 → ATIRIB_MEM-EXEC (X.1.1, 2)
   IN651 → ATTRIB_DROITS(X.1.1, INT)
   IN66 → ATIRIB_MEM-EXEC (X.1.2, 2)
   IN67 → ATTRIB_DROITS(X.1.2, TIMEOUT=1s ; start=1^{er} accès RW)
   IN68 → X.1.2 = 20000
   IN69 → X.1.1 = X.1.1 * X.1.2

### ANNEXE 5

### ap2.exe /* compilation de lecture_pwd() */

HEADER
   IN70 → ATTRIB_IDX_STAT (X.4) ; /* adresse_virtuelle lecture_pwd */
   IN71 → ATTRIB_IDX_STAT(X.4.1) ; /* adresse_virtuelle pwd_user */
   IN72 → ATTRIB_IDX_STAT(X.4.2) ; /* adresse_virtuelle retour */
   IN73 → ATTRIB_MEM(X.4, 50) ; /*alloue 50 octets pour lecture_pwd*/
   IN74 → LOAD X.4
CODE
   IN75 → COMPARE X.4.1, X.0.4
   IN76 → ...

### ANNEXE 6

### ap2.exe /* compilation de ecriture_pwd() */

HEADER
   ATTRIB_IDX_STAT (X.3) ; /* adresse_virtuelle ecriture_pwd */
   ATTRIB_IDX_STAT(X.3.1) ; /* adresse_virtuelle pwd_user */
   ATTRIB_MEM(X.3, 50) ; /*alloue 50 octets pour eciture_pwd*/
   LOAD X.3
CODE
   X.0.4 = X.3.1

### ANNEXE 7

### ap2.exe /* compilation de fn3() */

HEADER
   ATTRIB_IDX_STAT (X.2) ; /* adresse-virtuelle fn3 */
   ATTRIB_IDX_STAT(X.2.1) ; /* adresse_virtuelle a*/
   ATTRIB_IDX_STAT(X.2.2) ; /* adresse_virtuelle b*/
   ATTRIB_IDX_STAT(X.2.3) ; /* adresse virtuelle de table */
   ATTRIB_IDX_STAT(X.2.4) ; /* adresse virtuelle de overflow*/
   ATTRIB_IDX_STAT(X.2.5) ; /* i */
   ATTRIB_MEM(X.2, 300) ; /*alloue 300 octets pour fn3*/ LOAD X.2
CODE
   IN80 → ATTRIB_MEM_EXEC(X.2.3, 1, 10)
   IN81 → ATTRIB_MEM_EXEC(X.2.4, 2)
   IN82 → ATTRIB_MEM_EXEC(X.2.5, 1)
   IN83 → X.2.3[(X.2.5)] = X.2.5
   IN84 → Y = GET_INDEX (AP, FN, fn2)
   IN85 → MAP (Y.0.1 ; X.0.3)
   IN86 → MAP (Y.0.2, X.2.3)
   IN87 → CALL Y.0
   IN88 → UNMAP (Y.0.1 ; X.0.3)
   IN89 → UNMAP (Y.0.1 ; X.0.3)

### ANNEXE 8

### ap2.exe /* compilation de main() */

HEADER
   IN101 → X = AITRIB_IDX_DYN (AP, main)
   IN102 → ATTRIB_IDX_STAT (X.0) ; /* adresse_virtuelle de main */
   IN103 → ATTRIB_IDX_STAT(X.0.1) ; /* adresse_virtuelle res*/
   IN104 → ATTRIB_IDX_STAT(X.0.2) ; /* adresse_virtuelle VG1*/
   IN105 → ATTRIB_IDX_STAT(X.0.3) ; /* adresse_virtuelle VG2 */
   IN106 → ATTRIB_IDX_STAT(X.0.4); /* pwd*/
   IN107 → ATTRIB_IDX_STAT(X.0.5); /* pwd_user */
   IN108 → ATTRIB_MEM(X.0,1000) ; /*alloue 1000 octets pour main*/
   IN109 → LOAD X.0
CODE
   IN110 → AITRIB_MEM_EXEC (X.0.1, 1)
   IN111 → AITRIB_MEM_EXEC (X.0.1, 2)
   IN112 → ATTRIB_MEM_EXEC (X.0.1, 2)
   IN113 → ATTRIB_MEM_EXEC (X.0.1, 6)
   IN114 ATTRIB_MEM_EXEC (X.0.1, 6)
   IN115 → X.0.2 = 11
   IN116 → X.0.3 = 5
   IN117 → ATTRIB_DROITS(X.0.4 ; RO:X.4 ; WO : X.3)
   IN118 → CALL X.1
   IN119 → MAP (X.2.1, X.0.2)
   IN120 → MAP (X.2.2, X.0.3)
   IN121 → CALL X.2
   IN122 → UNMAP (X.2.1, X.0.2)
   IN123 → UNMAP (X.2.2, X.0.3)
   IN124 → MAP (X.3.1, X.0.5)
   IN125 → CALL X.3
   IN126 → UNMAP (X.3.1, X.0.5)
   IN127 → MAP (X.4.1, X.0.5)
   IN128 → MAP(X.4.2,X.0.1)
   IN129 → X.0.1 = CALL X.4
   IN130 → UNMAP (X.4.1, X.0.5)
   IN131 → UNMAP (X.4.2, X.0.1)

## Revendications

1. Procédé de création d'une adresse virtuelle (3.0.1) pour une entité logicielle (res) dite « fille » identifiée et nommée dans un code source d'un programme informatique appartenant au contexte d'une entité (Main) logicielle dite « mère » identifiée et nommée dans un code source d'un programme informatique, ladite adresse virtuelle (3.0.1) comportant une série de champs (3.0) permettant de retrouver la série de champs (3.0) de l'adresse virtuelle de l'entité logicielle mère (Main) et un champ unique (1) dans le contexte de l'entité logicielle mère, et dans lequel chaque série de champs est associée à une seule entité logicielle dont elle définit entièrement l'adresse virtuelle.

2. Procédé de création d'adresse virtuelle selon la revendication 1, **caractérisé en ce que** des droits (DT) d'une première entité logicielle pour accéder à une deuxième entité logicielle sont déterminés en comparant au moins un champ de l'adresse logique de la première entité logicielle avec au moins un champ de l'adresse logique de la deuxième entité logicielle, les adresses virtuelles desdites première et deuxième entités logicielles étant créées selon le procédé de la revendication 1.

3. Procédé de création d'adresse virtuelle selon la revendication 1 ou 2, **caractérisé en ce qu'**il comporte une étape (IN119) pour attribuer, à une entité logicielle fille (VG1) appartenant au contexte d'au moins deux entités logicielles mères, une adresse virtuelle (3.2.1, 3.0.2) à ladite entité logicielle fille pour chacun desdits contextes.

4. Procédé de création d'adresse virtuelle selon l'une quelconque des revendications 1 à 3, **caractérisé en ce qu'**une adresse virtuelle comporte au moins une information complémentaire précisant les champs identiques à ceux de l'adresse virtuelle de l'entité logicielle en cours d'exécution.

5. Procédé de création d'adresse virtuelle selon l'une quelconque des revendications 1 à 4, dans lequel on associe à l'adresse logique d'une entité logicielle (timeout) une information limitant (DT) dans le temps l'accès à cette entité logicielle.

6. Procédé d'exécution d'un programme informatique comportant une étape d'allocation (E31) d'une plage d'adresses dans la mémoire physique (15) d'un système informatique (SINF) en association avec l'adresse virtuelle d'une entité logicielle identifiée et nommée dans un code source d'un programme informatique, ladite adresse virtuelle étant créée par un procédé de création d'adresse virtuelle conforme à l'une quelconque des revendications 1 à 5, cette adresse virtuelle comportant un champ unique dans un contexte, et une série de champs permettant de retrouver la série de champs de l'adresse virtuelle d'une entité logicielle mère identifiée et nommée dans un code source d'un programme informatique définissant ledit contexte, et dans lequel chaque série de champs est associée à une seule entité logicielle dont elle définit entièrement l'adresse virtuelle.

7. Procédé d'exécution d'un programme informatique selon la revendication 6 **caractérisé en ce qu'**il comporte une étape au cours de laquelle on déplace une entité logicielle en mémoire, celle-ci restant identifiée par la même adresse logique avant et après déplacement.

8. Procédé d'exécution d'un programme informatique selon la revendication 6 ou 7 **caractérisé en ce que** la mémoire du système informatique est divisée dynamiquement en deux parties, les entités logicielles utilisées par le système informatique étant déplacées pour être regroupées dans la première partie de la mémoire tandis que la seconde partie de la mémoire est temporairement inutilisée.

9. Procédé selon la revendication 8 **caractérisé en ce qu'**il comporte une étape de gestion de l'alimentation électrique de la partie inutilisée de la mémoire.

10. Procédé d'exécution d'un programme informatique selon l'une quelconque des revendications 6 à 9 dans lequel on associe à l'adresse logique d'une entité logicielle le type de cette entité logicielle et en ce que l'on modifie dynamiquement le type de cette entité logicielle et la dimension en mémoire d'une entité logicielle.

11. Procédé d'exécution d'un programme informatique selon l'une quelconque des revendications 6 à 10 **caractérisé en ce que** l'on associe à l'adresse logique (2.0) d'une entité logicielle (FN2) une quantité maximale de mémoire pouvant lui être allouée et **en ce que** lors de chaque allocation mémoire à cette entité logicielle, on vérifie que cette quantité maximale n'est pas dépassée.

12. Procédé d'exécution d'un programme informatique selon l'une quelconque des revendications 6 à 11, **caractérisé en ce qu'**il comporte, dès qu'un accès est réalisé à cette entité logicielle, une étape de chargement par anticipation, dans une mémoire cache, uniquement du contenu d'une partie au moins de la plage d'adresses allouée à ladite entité logicielle.

13. Procédé d'exécution d'un programme informatique selon l'une quelconque des revendications 6 à 12, **caractérisé en ce qu'**il comporte, dès qu'une entité logicielle cesse d'être exécutée, une étape de déchargement par anticipation, du contenu en mémoire cache, de ladite entité logicielle et de ses entités filles.

14. Outil de génération de code (OGC) comportant des moyens de création d'une adresse virtuelle pour une entité logicielle dite « fille » identifiée et nommée dans un code source d'un programme informatique appartenant au contexte d'une entité logicielle dite « mère » identifiée et nommée dans un code source d'un programme informatique, ladite adresse virtuelle comportant une série de champs permettant de retrouver la série de champs de l'adresse virtuelle de l'entité logicielle mère et un champ unique dans le contexte de l'entité logicielle mère, et dans lequel chaque série de champs est associée à une seule entité logicielle dont elle définit entièrement l'adresse virtuelle.

15. Système informatique (SINF) comportant des moyens pour allouer une plage d'adresses dans la mémoire physique d'un système informatique en association avec l'adresse virtuelle d'une entité logicielle identifiée et nommée dans un code source d'un programme informatique ladite adresse virtuelle étant créée par les moyens de création de l'outil de génération de code conforme à la revendication 14, cette adresse virtuelle comportant un champ unique dans un contexte, et une série de champs permettant de retrouver la série de champs de l'adresse virtuelle d'une entité logicielle mère identifiée et nommée dans un code source d'un programme informatique définissant ledit contexte, et dans lequel chaque série de champs est associée à une seule entité logicielle dont elle définit entièrement l'adresse virtuelle.

## Patentansprüche

1. Verfahren zur Erzeugung einer virtuellen Adresse (3.0.1) fuer eine im Quell-Kode einer Software-Applikation identifizierte und genannte sogennante « Tochter» Software-Einheit (res), die zum Kontext einer im Quell-Kode einer Software-Applikation identifizierte und genannte sogennanten «Mutter» Software-Einheit (Main) gehoert, wobei diese virtuelle Adresse (3.0.1) eine Reihe von Feldern (3.0.1) beinhaltet, die ermoeglichen die Reihe von Feldern (3.0) der virtuellen Adresse der Mutter Software-Einheit (Main) und ein einziges Feld (1) im Kontext der Mutter Software-Einheit wiederzufinden, und in dem jede Reihe von Feldern mit einer einzigen Software-Einheit verknuepft wird, deren sie die virtuelle Adresse komplett definiert.

2. Verfahren zur Erzeugung einer virtuellen Adresse gemaess Anspruch 1, **gekennzeichnet dadurch, dass** die Zugriffs-Rechte (DT) einer ersten Software-Einheit auf einer zweiten Software-Einheit dadurch definiert werden, dass mindestens ein Feld der logischen Adresse der ersten Software-Einheit mit mindestens einem Feld der logischen Adresse der zweiten Software-Einheit verglichen werden, wobei die virtuellen Adressen der ersten und zweiten Software-Einheiten gemaess Verfahren des Anspruchs 1 erzeugt werden.

3. Verfahren zur Erzeugung einer virtuellen Adresse gemaess Anspruechen 1 und 2 **gekennzeichnet dadurch, dass** es eine Etappe (IN119) beinhaltet, um an einer sogenannten «Tochter» Software-Einheit (VG1), die zum Kontext von mindestens zwei sogenannten «Mutter» Software-Einheiten gehört, eine virtuelle Adresse (3.2.1, 3.0.2) der « Tochter » Software-Einheit für jeden genannten Kontext zu geben.

4. Verfahren zur Erzeugung einer virtuellen Adresse gemaess einer der Anspruechen 1 bis 3, **gekennzeichnet dadurch, dass** eine virtuelle Adresse mindestens eine zusaetzliche Information beinhaltet, die die identischen Felder zu den Feldern der virtuellen Adresse der ausgefuehrten Software-Einheit darstellt.

5. Verfahren zur Erzeugung einer virtuellen Adresse gemaess einer der Anspruechen 1 bis 4, in dem an der logischen Adresse einer Software-Einheit (timeout) eine Information (DT) hinzugefuegt wird, um zeitlich den Zugriff an der Software-Einheit zu begrenzen.

6. Verfahren zur Ausfuehrung einer Software-Applikation beinhaltend eine Etappe fuer die Zuteilung (E31) einer Adressen-Reihe im physikalischen Speicher (15) eines computerisierten System (SINF) im Zusammenhang mit der virtuellen Adresse der im Quell-Kode einer Software-Applikation identifizierten und genannten Software-Einheit, wobei die virtuelle Adresse, die gemaess einem Verfahren fuer die Erzeugung einer virtuellen Adresse beschrieben in einer der Anspruechen 1 bis 5 erzeugt wird, in diesem Kontext ein einziges Feld und eine Reihe von Feldern, die ermoeglichen, die Reihe von Feldern der virtuellen Adresse der in einem Quell-Kode einer Software-Applikation identifizierten und genannten « Mutter » Software-Einheit wiederzufinden, beinhaltet und in dem jede Reihe von Feldern mit einer einzigen Software-Einheit verknuepft wird, deren sie die virtuelle Adresse komplett definiert.

7. Verfahren zur Ausfuehrung einer Software-Applikation gemaess des Anspruches 6 **gekennzeichnet dadurch, dass** es eine Etappe beinhaltet, in der eine Software-Einheit im Speicher verschoben wird, wobei diese Software-Einheit durch die selbe logische Adresse vor und nach der Verschiebung identifiziert wird.

8. Verfahren zur Ausfuehrung einer Software-Applikation gemaess Anspruche 6 oder 7 **gekennzeichnet dadurch, dass** der Speicher des computerisierten Systems dynamisch in zwei Teile dividiert wird, in dem die vom computerisierten System verwendete Software-Einheiten verschoben werden, um in dem ersten Teil des Speichers zusamengefasst zu werden, waehrend der zweite Teil voruebergehend unbenutzt bleibt.

9. Verfahren gemaess Anspruch 8 **gekennzeichnet dadurch, dass** es eine Etappe fuer die Verwaltung der elektrischen Versorgung des unbenutzten Teils des Speichers beinhaltet.

10. Verfahren zur Ausfuehrung einer Software-Applikation gemaess einer der Anspruechen 6 bis 9, in dem an einer logischen Adresse einer Software-Einheit sein Typ verknuepft wird und in dem der Typ der Software-Einheit und der Speicherplatzbedarf der Software-Einheit im Speicher dynamisch geaendert werden.

11. Verfahren zur Ausfuehrung einer Software-Applikation gemaess einer der Anspruechen 6 bis 10, **gekennzeichnet dadurch, dass** an einer logischen Adresse (2.0) einer Software-Einheit (FN2) sein maximaler Speicherplatzbedarf, der zugeteilt werden darf, verknuepft wird , und dass bei jeder Speicher-Zuteilung geprueft wird, ob dieser maximale Speicherplatzbedarf nicht ueberschritten wird.

12. Verfahren zur Ausfuehrung einer Software-Applikation gemaess einer der Anspruechen 6 bis 11, **gekennzeichnet dadurch, dass** es beim Zugriff auf eine Software-Einheit eine Etappe beinhaltet, um im Cache-Speicher nur den Inhalt mindestens eines Teiles der Adressen-Reihe, der der Software-Einheit zugeteilt wurde, im Voraus zu laden.

13. Verfahren zur Ausfuehrung einer Software-Applikation gemaess einer der Anspruechen 6 bis 12, **gekennzeichnet dadurch, dass** es, sobald eine Software-Einheit nicht mehr ausgefuehrt wird, eine Etappe beinhaltet, um im Voraus den Inhalt im Cache-Speicher der obengenannten Software-Einheit und seine Tochter Software-Einheit zu leeren.

14. Applikation zur automatischen Codegenerierung beinhaltend Mittel zur Erzeugung einer virtuellen Adresse fuer eine im Quell-Kode einer Software-Applikation identifizierte und gennante sogennante « Tochter» Software-Einheit, die zum Kontext einer im Quell-kode einer Software-Applikation identifizierte une gennante sogennanten « Mutter » Software-Einheit gehoert, wobei die virtuelle Adresse eine Reihe von Feldern beinhaltet, die ermoeglichen die Reihe von Feldern der virtuellen Adresse der « Mutter » Software-Einheit und ein einziges Feld im Kontext der « Mutter » Software-Einheit wiederzufinden und in dem jede Reihe von Feldern einer einzigen Software-Einheit zugeordnet wird, und in dem jede Reihe von Feldern mit einer einzigen Software-Einheit verknuepft wird, deren sie die virtuelle Adresse komplett definiert.

15. Computerisiertes System beinhaltend Mittel, um eine Adressen-Reihe im physikalischem Speicher des computerisierten Systems im Zusammenhang mit der virtuellen Adresse der im Quell-Kode einer Software-Applikation identifizierten und genannten Software-Einheit zuzuteilen, wobei die virtuelle Adresse durch die Erzeugungmittel der Applikation zur automatischen Codegenerierung gemaess dem Anspruech 14 erzeugt wird, in dem diese virtuelle Adresse in diesem Kontext ein einziges Feld und eine Reihe von Feldern, die ermoeglichen die Reihe von Feldern der virtuellen Adresse der in einem Quell-Kode einer Software-Applikation identifizierten und genannten « Mutter » Software-Einheit wiederzufinden, beinhaltet und in dem jede Reihe von Feldern mit einer einzigen Software-Einheit verknuepft wird, deren sie die virtuelle Adresse komplett definiert.

## Claims

1. A method for creating a virtual address (3.0.1) creating a virtual address for a software entity (res) called a "daughter", identified and named in the source code of a software program, belonging to the context of a software entity called the "mother", identified and named in the source code of the software program, that virtual address (3.0.1) comprising a series of fields allowing retrieval of the series of fields of the mother software entity (3.0) and a field unique (1) in the context of the mother software entity, and wherein each series of fields is being associated with a single software entity from which it defines completely the virtual address.

2. A virtual address creation process according to Claim 1, wherein rights (DT) of a first software entity to access a second software entity are determined by comparing at least one field of the logical address of the first software entity with at least one field of the logical address of the second software entity, whereas virtual addresses of said first and second software entity being created according to the process of claim 1.

3. A virtual address creation process according to one of Claims 1 or 2 , further comprising a step (IN119) for assigning, to a daughter software entity (VG1) belonging to the context of at least two mother software entities, a virtual address (3.2.1, 3.0.2) to said daughter software entity for each of said contexts.

4. A virtual address creation process according to one of Claims 1 to 3, a virtual address comprising at least one supplementary datum specifying the fields that are identical to those of a virtual address of a reference software entity being executed.

5. A virtual address creation process according to one of Claims 1 to 4, wherein information placing a time limit (DT) on access to the software entity is associated with the logical address of a software entity (timeout).

6. A process for executing a computer program including a step (E31) consisting of allocating a range of addresses in the physical memory (15) of a computer system (SINF) in association with the virtual address of a software entity, identified and named in the source code of a software program, said virtual address being created by a process of creation of virtual addresses according to Claims 1 to 5, that virtual address including a field that is unique in a context, and a series of fields allowing retrieval of the series of fields of the virtual address of a mother software entity, identified and named in the source code of a software program, defining that context, and wherein each series of fields is associated with a single software entity from which it defines completely the virtual address.

7. A process for executing a computer program according to Claim 6, further including a step during which a software entity is shifted in memory, the entity still being defined by the same logical address before and after shifting.

8. A process for executing a computer program according to one of Claims 6 or 7, the memory of the computer system being dynamically divided into two parts, the software entities used by the computer system being shifted so as to group them in the first part of the memory while the second part of the memory is temporarily unused.

9. A process according to Claim 8, further including a step consisting of managing the power supply of the unused part of the memory.

10. A process for executing a computer program according to one of Claims 6 to 9, wherein the type of a software entity is associated with the logical address of that software entity and wherein the type of that software entity and the memory size of a software entity are dynamically modified.

11. A process for executing a computer program according to one of Claims 6 to 10, a maximum quantity of memory that can be allocated to it being associated with the logical address (2.0) of a software entity (FN2), and wherein during each allocation of memory to this software entity a check being made to ensure that this maximum quantity is not exceeded.

12. A process for executing a computer program according to one of Claims 6 to 11 further including, when access is performed to this software entity, a step consisting of advance loading into a cache memory of only content from at least part of the range of addresses allocated to said software entity.

13. A process for executing a computer program according to one of Claims 6 to 12, further including, when a software entity ceases to be executed, a step consisting of advance unloading of the content in cache memory of said software entity and of its daughter entities.

14. A code generation tool (OGC) including means for creating a virtual address for a so-called "daughter" software entity, identified and named in the source code of a software program, belonging to the context of a so-called "mother" software entity, identified and named in the source code of a software program, said virtual address comprising a series of fields allowing retrieval of the series of fields of the virtual address of the mother software entity and a field unique in the context of the mother software entity, and wherein each series of fields is associated with a single software entity from which it defines completely the virtual address.

15. A computer system (SINF) including means for allocating a range of addresses in the physical memory of a computer system in association with the virtual address of a software entity, identified and named in the source code of a software program, said virtual address, being created by the means of the code generation tool according to claim 14, including a field that is unique in a context and a series of fields allowing retrieval of the series of fields of the virtual address of a mother software entity defining said context, and wherein each series of fields is associated with a single software entity from which it defines completely the virtual address.
